Europäisches Patentamt

European Patent Office

Office européen des brevets

(11) Numéro de publication : **0 028 978**
**B1**

# (12) FASCICULE DE BREVET EUROPÉEN

(45) Date de publication du fascicule du brevet :
**11.04.84**

(51) Int. Cl.³ : **F 16 C   7/02**

(21) Numéro de dépôt : **80401587.3**

(22) Date de dépôt : **06.11.80**

(54) **Bielle ou objet analogue comportant un corps creux.**

(30) Priorité : **08.11.79 FR 7928012**

(43) Date de publication de la demande :
**20.05.81 Bulletin 81/20**

(45) Mention de la délivrance du brevet :
**11.04.84 Bulletin 84/15**

(84) Etats contractants désignés :
**AT BE CH DE GB IT LI LU NL SE**

(56) Documents cités :
**FR-A- 2 284 819**
**FR-A- 2 309 453**
**US-A- 3 638 979**

(73) Titulaire : **SKF COMPAGNIE D'APPLICATIONS MECA-
NIQUES & CIE.**
**Route de Roybon**
**F-26240 Saint-Vallier-s/Rhône (FR)**

(72) Inventeur : **Monteillet, Denis**
**Quartier de Villeneuve de Vals**
**F-26550 Saint Barthelemy de Vals (FR)**

(74) Mandataire : **Bolvin, Claude**
**9, rue Edouard-Charton**
**F-78000 Versailles (FR)**

EP 0 028 978 B1

Bielle ou objet analogue comportant un corps creux

La présente invention concerne une bielle ou objet analogue, destinée à transmettre un effort de compression ou un effort de traction, comportant un corps tubulaire fibreux, un embout de liaison à l'une des extrémités de ce corps, un tirant solidaire de l'embout et comportant extérieurement une partie tronconique, un élément expansible radialement, muni d'une partie tronconique de même conicité que la partie tronconique du tirant, présentant un diamètre extérieur sensiblement égal au diamètre intérieur du corps de la bielle et monté sur le tirant, et un capuchon de diamètre intérieur sensiblement égal au diamètre extérieur du tube.

On connaît des bielles ou objets analogues qui comportent un corps creux réalisé en fibres, par exemple en fibres de carbone, et dont les extrémités sont munies d'embouts de liaison.

Jusqu'à présent, une bielle de ce genre était réalisée en disposant une série de rubans en une matière fibreuse imprégnée de résine sur un mandrin en une matière fibreuse thermofusible ainsi que sur des embouts placés aux extrémités du mandrin et en procédant ensuite à la cuisson de la résine ; lors de cette cuisson, le mandrin se désagrège ou fond et il ne reste plus que le corps de la bielle.

On a proposé récemment de former le corps de la bielle par un tube en fibres du commerce. Mais la fixation des embouts aux extrémités du tube pose des problèmes ; elle ne peut pratiquement se faire que par collage. Pour que ce collage résiste correctement tant aux efforts de traction qu'aux chocs thermiques sous charge, il est nécessaire, dans l'état actuel des connaissances, de réaliser les embouts ou extrémités des bielles en titane, métal coûteux et rare. De plus, la forme de ces embouts doit être particulièrement étudiée (d'où une fabrication et des usinages compliqués) pour permettre la réalisation d'un ancrage mécanique efficace indépendamment du collage.

Le brevet américain US-A-3 638 979 décrit un dispositif de transmission de forces comprenant un tube en matière fibreuse sur l'une des extrémités duquel est fixé un embout de liaison. Cet embout fait corps avec un élément tronconique ; une série de coins, dont la face intérieure a la même conicité que le tirant et dont la face extérieure est cylindrique, avec un diamètre extérieur sensiblement égal au diamètre intérieur du tube, est montée sur le tirant. Un capuchon de diamètre intérieur sensiblement égal au diamètre extérieur du tube est monté sur l'extrémité de ce tube.

Ce dispositif de transmission de force résiste mal à une compression qui risque d'entraîner une désolidarisation de l'embout et un glissement du tube fibreux, qui endommage ce tube.

La présente invention a pour objet une bielle ou objet analogue du type indiqué précédemment, mais qui résiste aussi bien à une compression qu'à une traction.

Cette bielle est caractérisée en ce que l'embout de liaison comporte une partie filetée vissée dans un taraudage du tirant, en ce que l'élément expansible est constitué par un organe annulaire unique comportant des fentes longitudinales fermées à leurs deux extrémités, en ce que le capuchon est vissé avec jeu sur le tirant de manière que sa face extérieure soit en saillie par rapport à la tranche extérieure du tirant, en ce qu'un écrou également vissé sur l'embout bloque ce capuchon.

Lors de l'utilisation de la bielle, la colle est soumise à des efforts de cisaillement relativement faibles de sorte que le capuchon reste adhérent au corps tubulaire même si ce capuchon n'est pas en titane. A la limite, le collage peut même être supprimé.

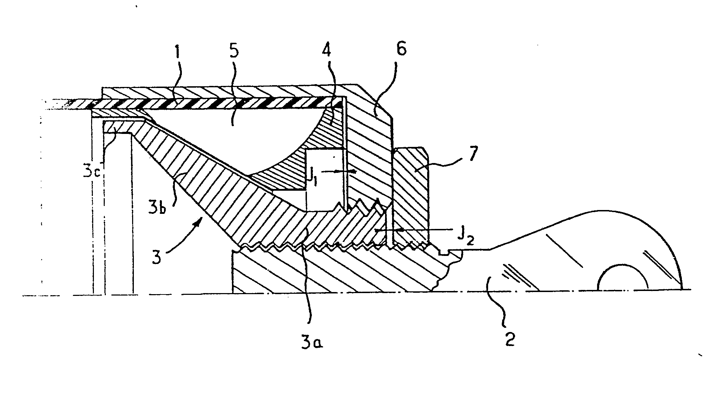

On a décrit ci-après, à titre d'exemple non limitatif, un mode de réalisation d'une bielle réalisée selon l'invention avec référence à la figure unique du dessin annexé qui est une demi-coupe de cette bielle.

Telle qu'elle est représentée au dessin, la bielle selon l'invention comprend un corps 1 qui est constitué par un tronçon de tube en fibres, par exemple en fibres de carbone agglomérées, et à l'une des extrémités duquel est monté un embout 2 réalisé en métal quelconque, par exemple en acier ou en un alliage d'aluminium.

L'extrémité de l'embout 2 est filetée. Sur cette extrémité est monté un tirant 3 comportant une partie cyclindrique 3a qui est vissée avec jeu sur l'extrémité de l'embout 1 et munie d'un filetage extérieur, une partie 3b qui prolonge la partie 3a et est extérieurement tronconique, et une partie 3c qui est cylindrique et prolonge la partie 3b.

Sur le tirant 3 est monté un organe expansible 4 qui est intérieurement tronconique, avec la même conicité que la partie 3b de l'embout 3, et extérieurement cylindrique avec un diamètre sensiblement égal au diamètre interne du tube 1. Cet organe expansible est muni de fentes longitudinales 5 fermées à leurs deux extrémités. Un capuchon extérieur 6 dont la jupe présente un diamètre interne sensiblement égal au diamètre externe du tube 1 est vissé avec jeu sur le tirant 3 et éventuellement collé sur le tube 1 ; un écrou 7 vissé avec jeu sur l'embout bloque ce capuchon.

Pour fixer l'embout 2 au tube 1, on met en place sur l'embout le tirant 3 ainsi que l'organe expansible 4 et on introduit l'ensemble dans le tube 1. Puis on visse le capuchon 6 sur le tirant 3 de façon que l'organe expansible 4 soit pratiquement au contact du tirant 3 et du capuchon 6. Le tube 1 a, de préférence, été préalablement placé de manière qu'un certain jeu $J_1$ existe alors entre le fond du capuchon 6 et la tranche du tube 1. Par ailleurs, le fond du capuchon 6 a une épaisseur telle que sa face extérieure se trouve à une certaine distance $J_2$ de la face extérieure du tirant 3, qui est supérieure au jeu $J_1$.

Il ne reste plus qu'à bloquer l'écrou 7.

Lorsqu'on bloque le capuchon 6 à l'aide de l'écrou 7, il s'établit un équilibre entre les positions des divers filetages. Le flanc droit des filets de l'écrou 7 si on regarde le dessin, est en appui sur le flanc gauche des filets de l'embout 2 ; l'expérience montre que le flanc droit des filets du capuchon 6 est en appui sur le flanc gauche des filets du tirant 3. En d'autres termes, le capuchon et l'écrou 7 sont, au dessin, à fond de filet vers la droite. Les filets du tirant 3 sont dans une position moyenne par rapport aux filets de l'embout 2, de sorte que, compte tenu du jeu normal dans le filetage, un certain déplacement relatif de l'embout et du tirant est possible.

Lorsque la bielle est soumise à un effort de compression, l'écrou 7 repousse le capuchon 6 qui vient au contact de la tranche du tube 1, le jeu $J_1$ devenant ainsi nul ; la colle de liaison éventuelle se déforme élastiquement, l'effort de cisaillement auquel elle est soumise ayant une valeur limitée. L'effort de compression est ainsi transmis au tube par l'écrou et le capuchon, sans passer par le tirant 3.

Lorsque la bielle est soumise à un effort de traction, la pression exercée par le contre-écrou 7 sur le capuchon 6 diminue ; le jeu entre les filets de l'embout 2 et ceux du tirant 3 diminue et devient nul. A partir de ce moment, le tirant 3 exerce un effort sur l'élément 4 et tend à l'expandre. Cet élément entraîne tout d'abord le tube 1 dont la tranche vient, comme précédemment, au contact du fond du capuchon 6. Puis l'élément comprime radialement le tube 1 contre la paroi de la jupe du capuchon. Le tube 1 est ainsi serré entre le capuchon et l'élément expansible 4 et ne peut glisser par rapport à l'ensemble. Il n'y a donc pas cisaillement de la colle et, compte tenu du serrage, le collage n'est même pas nécessaire.

En d'autres termes, au niveau de la liaison du tube 1 avec l'embout 2, l'effort de traction exercé par l'embout est transformé en un effort de compression radial qui serre la paroi du tube et empêche ce tube de glisser par rapport à l'embout 2. Bien entendu, la partie du tube située à l'extérieur de cette liaison reste soumise à un effort de traction.

## Revendications

1. Bielle ou objet analogue, destinée à transmettre un effort de compression ou un effort de traction, comportant un corps tubulaire fibreux (1), un embout de liaison (2) à l'une des extrémités de ce corps, un tirant (3) solidaire de l'embout et comportant extérieurement une partie tronconique (3b), un élément (4) expansible radialement, muni d'une partie tronconique de même conicité que la partie tronconique (3b) du tirant, présentant un diamètre extérieur sensiblement égal au diamètre intérieur du corps (1) de la bielle et monté sur le tirant (3), et un capuchon (6) de diamètre intérieur sensiblement égal au diamètre extérieur du tube (1), caractérisée en ce que l'embout de liaison (2) comporte une partie filetée vissée dans un taraudage du tirant, en ce que l'élément expansible (4) est constitué par un organe annulaire unique comportant des fentes longitudinales fermées à leurs deux extrémités, en ce que le capuchon (6) est vissé avec jeu sur le tirant (3) de manière que sa face extérieure soit en saillie par rapport à la tranche extérieure du tirant (3), et en ce qu'un écrou (7) également vissé sur l'embout bloque ce capuchon.

2. Bielle ou objet analogue selon la revendication 1, caractérisée en ce que l'extrémité du corps tubulaire (1) est écartée du fond du capuchon (6) d'une distance ($J_1$).

3. Bielle selon la revendication 2, caractérisée en ce que la distance ($J_1$) est inférieure à la distance ($J_2$) dont la face extérieure du capuchon fait saillie par rapport à la tranche extérieure du tirant.

## Claims

1. Connecting rod or like object, adapted to transmit an effort of compression or an effort of traction, comprising a fibrous tubular body 1, a connecting end piece 2 at one of the ends of this body, a tie rod 3 fast with the end piece and comprising, externally, a truncated part 3b, a radially expansible element 4, provided with a truncated part with the same conicity as the truncated part 3b of the tie rod, presenting an outer diameter substantially equal to the inner diameter of the body 1 of the connecting rod and mounted on the tie rod 3, and a cap 6 of inner diameter substantially equal to the outer diameter of the tube 1, characterized in that the connecting end piece 2 comprises a treaded part screwed in a tapping in the tie rod, in that the expansible element 4 is constituted by a single annular member comprising longitudinal slots closed at their two ends, in that the cap 6 is screwed with clearance on the tie rod 3 so that its outer face projects with respect to the outer edge of the tie rod 3, and in that a nut 7 also screwed on the end piece blocks this cap.

2. Connecting rod or like object according to Claim 1, characterized in that the end of the tubular body 1 is spaced apart from the bottom of the cap 6 by a distance $J_1$.

3. Connecting rod according to Claim 2, characterized in that the distance $J_1$ is less than the distance $J_2$ by which the outer face of the cap projects with respect to the outer edge of tie rod.

## Ansprüche

1. Kuppelstange od. dgl. zum Übertragen einer Zugoder Druckkraft, bestehend aus einem rohrförmigen Faserkörper (1), einem Anschlußstück (2) an einem der Enden des Körpers, einem mit dem Anschlußstück einstückig verbundenen Spannstück (3), das an der Außenseite einen kegelförmigen Bereich (3b) trägt, einem radial aufweitbaren Element (4), das mit einem kegelförmigen Bereich versehen ist, der den gleichen Kegelwinkel hat wie der kegelförmige Bereich (3b) des Spannstücks und dessen Außendurchmesser im wesentlichen dem Innendurchmesser des Körpers (1) der Kuppelstange entspricht und auf dem Spannstück (3) angeordnet ist, und einer Schutzkappe (6), deren Innendurchmesser im wesentlichen dem Außendurchmesser des Rohres (1) entspricht, dadurch gekennzeichnet, daß das Anschlußstück (2) einen mit einem Gewinde versehenen Bereich hat, der in ein Innengewinde des Spannstücks eingeschraubt ist, daß das aufweitbare Element (4) aus einem einteiligen ringförmigen Organ besteht, das mit an beiden Enden geschlossenen Längsschlitzen versehen ist, daß die Schutzkappe (6) derart mit Spiel auf das Spannstück (3) aufgeschraubt ist, daß ihre Außenseite über die äußere Stirnseite des Spannstücks (3) vorsteht, und daß eine auf das Anschlußstück aufgeschraubte Mutter (7) die Schutzkappe (6) blockiert.

2. Kuppelstange nach Anspruch 1, dadurch gekennzeichnet, daß das Ende des rohrförmigen Körpers (1) unter einem Abstand ($J_1$) vom Boden der Schutzkappe (6) angeordnet ist.

3. Kuppelstange nach Anspruch 2, dadurch gekennzeichnet, daß der Abstand ($J_1$) kleiner ist als der Abstand ($J_2$), um den die Außenseite der Schutzkappe über die äußere Stirnkante des Spannstücks vorsteht.